# FASCICULE DE BREVET EUROPEEN

(11) **EP 0 792 111 B1**
(45) Date de publication et mention de la délivrance du brevet: **14.07.1999**
(21) Numéro de dépôt: 95940307.2
(22) Date de dépôt: 14.11.1995
(51) Int. Cl.: A43B 5/14, B62M 3/08, A63C 9/08

(54) **DISPOSITIF DE FIXATION D'UNE CHAUSSURE A UN APPAREIL COMPORTANT UN AIMANT**
VORRICHTUNG ZUM BEFESTIGEN EINES SCHUHES AN EINER ANORNDUNG MIT EINEM MAGNETEN
DEVICE FOR FIXING A SHOE TO AN APPARATUS PROVIDED WITH A MAGNET

(30) Priorité: 16.11.1994 FR 9413691; 27.03.1995 FR 9503547
(43) Date de publication de la demande: 03.09.1997
(73) Titulaire: DE LATTRE, Bertrand, F-75017 Paris (FR)
(72) Inventeur: DE LATTRE, Bertrand, F-75017 Paris (FR)
(74) Mandataire: CABINET BONNET-THIRION
(86) Numéro de dépôt international: FR9501492
(87) Numéro de publication internationale: WO9614770

(56) Documents cités:
- DE-A- 2 835 720
- US-A- 3 537 719
- US-A- 3 927 897
- PATENT ABSTRACTS OF JAPAN vol. 16 no. 034 (M-1204) ,28 Janvier 1992 & JP,A,03 243488 (SHIMANO) 30 Octobre 1991, cité dans la demande

## Description

La présente invention concerne un dispositif de fixation d'une chaussure à un appareil comportant un aimant ; l'appareil est, par exemple, un ski ou une pédale de bicyclette.

On a déjà proposé dans PATENT ABSTRACTS OF JAPAN Vol. 16, n° 034 (M-1204), & JP-A-03243488, un dispositif de fixation à aimant pour fixer une chaussure sur une pédale de bicyclette ; malheureusement, tel que ce dispositif est agencé, il ne permet pas, dans l'encombrement autorisé au droit des zones coopérantes de la chaussure et de l'appareil, ici une pédale de bicyclette, d'obtenir une force de fixation, ou de solidarisation, de nature magnétique suffisante compte tenu des sollicitations auxquelles la fixation est soumise lors du pédalage.

Dans le document FR-A-2 705 080 est décrit un dispositif de fixation d'une chaussure à une pédale comportant un aimant, dans lequel la force d'attraction magnétique est limitée par la conception de ce dispositif.

Dans le document WO-94/26582, un dispositif du genre de celui décrit dans le document ci-dessus est agencé en sorte qu'on obtient une amélioration sur le plan de la valeur de la force magnétique de fixation ; toutefois, il est relativement compliqué à réaliser.

La présente invention a pour but de proposer un dispositif du type ci-dessus qui soit simple, léger, facile à réaliser, peu encombrant, ne présentant pas les inconvénients ci-dessus.

Ainsi, selon l'invention, un dispositif de fixation d'une chaussure à un appareil, ledit dispositif comportant au moins un moyen d'aimant solidaire de l'appareil et une plaque de fermeture en métal magnétique solidaire de la chaussure, est caractérisé par le fait que les pôles du moyen d'aimant sont flanqués chacun d'une plaque armature en métal magnétique, les deux plaques armatures coopérant avec la plaque de fermeture pour la fermeture du champ magnétique.

De préférence, l'axe d'aimantation du moyen d'aimant s'étend parallèlement à la plaque de fermeture.

Avantageusement, l'axe d'aimantation du moyen d'aimant est parallèle à l'axe longitudinal de l'appareil qui est lui-même parallèle à l'axe longitudinal de la chaussure lorsque celle-ci est fixée sur l'appareil.

De préférence, sont prévus deux moyens d'aimant disposés à distance l'un de l'autre ; la plaque de fermeture est composée de deux demi-plaques, chacune étant au droit d'un moyen d'aimant et de ses plaques armatures associées.

Avantageusement, les plaques armatures traversent le corps de pédale.

De préférence, les bords d'extrémité des plaques armatures sont en proéminence par rapport au corps de pédale et définissent le plan de solidarisation.

Avantageusement, les bords d'extrémité des plaques armatures sont cylindriques, de forme convexe, par exemple à section elliptique ou circulaire.

De préférence, les deux moyens d'aimant sont en forme de parallélépipèdes de dimensions différentes et de volumes égaux ou presque égaux.

Avantageusement, les plaques armatures associées à un même aimant ont des dimensions différentes et ont des sections dont les aires transversales sont égales ou presque égales.

De préférence, les plaques armatures et les moyens d'aimant ont une forme cylindrique à section circulaire centrée sur l'axe de pédale.

Avantageusement, chacun des moyens d'aimant est proche d'une face du corps de pédale et éloignée de l'autre face, la pédale étant réversible.

Le dispositif selon l'invention se prête bien à la réalisation d'un dispositif du type de sécurité, c'est-à-dire conçu de telle sorte que la désolidarisation de la chaussure et de l'appareil est automatique en cas de chute ; il est nécessaire dans ce type de dispositif de prévoir des moyens d'éloignement à la disposition de l'usager pour "déchausser", c'est-à-dire éloigner la chaussure de l'appareil contre l'effort important d'attraction magnétique.

Avantageusement, le dispositif comporte un moyen d'éloignement, porté par l'un des éléments, appareil ou chaussure, coopérant avec un moyen d'éloignement complémentaire porté par l'autre élément, lesdits moyens d'éloignement permettant de provoquer l'éloignement de la chaussure par rapport à l'appareil dans le sens d'une augmentation de l'entrefer magnétique à partir de la position qui correspond à la solidarisation de la chaussure et de l'appareil.

Selon une forme de réalisation, les moyens d'éloignement portés par l'appareil sont en forme de portées de cames disposées selon un axe faisant un angle avec l'axe longitudinal tandis que les moyens d'éloignement portées par la chaussure sont constitués par des bords suiveurs de came de la plaque de fermeture qui dépasse de la semelle de la chaussure.

Selon une autre variante, les moyens d'éloignement portés par l'appareil sont constitués par des rampes disposées latéralement.

Avantageusement l'un des moyens d'éloignement est en proéminence par rapport à la face de l'élément par laquelle il coopère avec l'autre élément, l'autre moyen d'éloignement comprenant une échancrure ouverte vers l'une des extrémités longitudinales de l'élément, ledit l'un des moyens d'éloignement étant disposé sur, ou au voisinage de, l'axe longitudinal de l'élément et adapté à coopérer avec les bords de ladite échancrure.

Avantageusement, ledit l'un des moyens d'éloignement coopère avec jeu avec les bords de l'échancrure qui sont à une distance l'un de l'autre supérieure à la largeur maximum dudit l'un des moyens d'éloignement.

De préférence, les bords de l'échancrure s'étendent longitudinalement.

De préférence, les bords de l'échancrure forment entre eux un V légèrement ouvert vers l'extérieur.

Avantageusement, pour la coopération entre eux des moyens d'éloignement portés respectivement par la chaussure et par l'appareil, l'un des moyens d'éloignement présente au moins une face inclinée de coopération faisant un angle avec un plan vertical, l'autre moyen d'éloignement comportant une arête coopérant avec ladite face inclinée.

De préférence, ledit plan vertical est parallèle, ou voisin d'un plan parallèle, au plan vertical passant par l'axe longitudinal de l'élément, ladite arête étant portée par un bord de ladite échancrure.

Avantageusement, des moyens de butée franche sont prévus pour la venue en butée, dans les deux sens de la direction longitudinale, de la chaussure sur l'appareil, et l'un desdits moyens de butée franche pour l'un desdits sens est constitué par le bord de l'échancrure qui est adapté à coopérer avec une portée ménagée sur le moyen d'éloignement complémentaire de l'élément, et disposée en regard dudit bord, sur, ou au voisinage de, l'axe longitudinal dudit élément ; l'autre desdits moyens de butée franche pour l'autre desdits sens est constitué par une creusure en forme de V ouvert portée par l'un des éléments, et avec laquelle coopère un élément de butée complémentaire porté par l'autre élément ; de préférence, l'élément de butée complémentaire est un pion ; en variante, l'élément de butée complémentaire est en forme de V.

Selon une forme de réalisation, l'échancrure est ménagée dans la plaque de fermeture.

Avantageusement, la creusure est portée par la chaussure et en forme de V ouvert du côté opposé à celui de l'échancrure ; en variante, la creusure est portée par l'appareil et en forme de V ouvert du même côté que celui de l'échancrure.

Avantageusement, le dispositif comporte un moyen de réglage de la force magnétique de solidarisation.

De préférence, la pédale est munie à l'arrière d'un décrottoir.

Dans une forme préférée d'application, le dispositif de fixation est prévu entre une pédale de bicyclette et une chaussure de cycliste.

Selon une autre forme d'application, le dispositif de fixation est prévu entre un ski et une chaussure de ski.

La description qui suit concerne l'application du dispositif selon l'invention à la fixation d'une chaussure de cycliste sur une pédale de bicyclette, pour faciliter la compréhension ; l'application de l'invention à un appareil autre, tel qu'un ski par exemple, ne sera pas décrite, cette transposition ne présentant aucune difficulté particulière.

Pour mieux faire comprendre l'objet de l'invention, on va en décrire, maintenant, à titre d'exemple purement illustratif et non limitatif, des modes de réalisation représentés sur les dessins annexés.

Sur ces dessins :
- la figure 1 est une vue générale schématique montrant une chaussure et une pédale équipées d'un dispositif de fixation selon l'invention ;
- la figure 2 est une vue partielle du dessous de la chaussure de la figure 1 ;
- la figure 3 est une vue en coupe partielle de la figure 1, à plus grande échelle, par un plan vertical passant par l'axe longitudinal de la chaussure, la chaussure et la pédale étant éloignées l'une de l'autre pour faciliter la lecture du dessin ;
- la figure 4 est une vue, partiellement en coupe, selon IV-IV de la figure 3 ;
- la figure 5 est une vue partielle en coupe selon V-V de la figure 3 ;
- la figure 6 est une vue analogue à la figure 5, montrant la chaussure en cours d'éloignement par rapport à la pédale ;
- la figure 7 est une vue partielle en perspective montrant les moyens d'éloignement des figures 1 à 6, à plus grande échelle ;
- les figures 8 et 9 sont analogues aux figures 2 et 3 et correspondent à une variante de dispositif selon l'invention ;
- la figure 10 est une vue partielle analogue à la figure 8 mais correspond à une variante ;
- les figures 11 et 12 sont analogues aux figures 2 et 3 et correspondent à une autre variante de dispositif selon l'invention ;
- les figures 13 à 15 sont analogues aux figures 2 à 4 et correspondent à encore une autre variante de dispositif selon l'invention ;
- la figure 16 est une vue partielle d'une variante de la figure 15 ;
- la figure 17 est analogue à la figure 13 et correspond à encore une autre variante.
- la figure 18 est une pédale vue de dessus correspondant à une autre variante de dispositif selon l'invention ;
- la figure 19 est une vue selon XIX-XIX de la figure 18 ;
- la figure 20 est une pédale vue de dessus correspondant à une autre variante de dispositif selon l'invention ;
- la figure 21 est une vue selon XXI-XXI de la figure 20 ;
- la figure 22 est une vue partielle, en coupe partielle, montrant une variante de dispositif selon l'invention ;
- la figure 23 est une vue de dessus d'encore une autre variante de pédale ;
- la figure 24 est une coupe selon XXIV-XXIV de la figure 23.
- la figure 25 est une vue schématique en coupe d'une variante de pédale équipée d'un moyen de réglage ;
- la figure 26 est une vue partielle en coupe selon XXVI-XXVI de la figure 27 d'une pédale équipée d'une variante de moyen de réglage ;
- la figure 27 est une vue de dessus par rapport à la figure 26 ;
- la figure 28 est une vue en coupe d'une variante de pédale ;
- la figure 29 est une vue schématique de dessus d'une autre variante de pédale ;
- la figure 30 est une vue selon XXX-XXX de la figure 29 ;
- la figure 31 est une vue partielle schématique de dessus d'une autre variante de pédale ;
- la figure 32 est une vue selon XXXII-XXXII de la figure 31;
- la figure 33 est une vue schématique en coupe d'encore une variante de pédale ;
- la figure 34 est une vue partielle de dessus de la pédale de la figure 33 selon XXXIV-XXXIV de cette figure ;
- la figure 35 est une vue selon XXXV-XXXV de la figure 33 ;
- la figure 36 est une vue en plan d'une variante de plaque de fermeture ;
- la figure 37 est une vue schématique en coupe d'encore une variante de pédale.

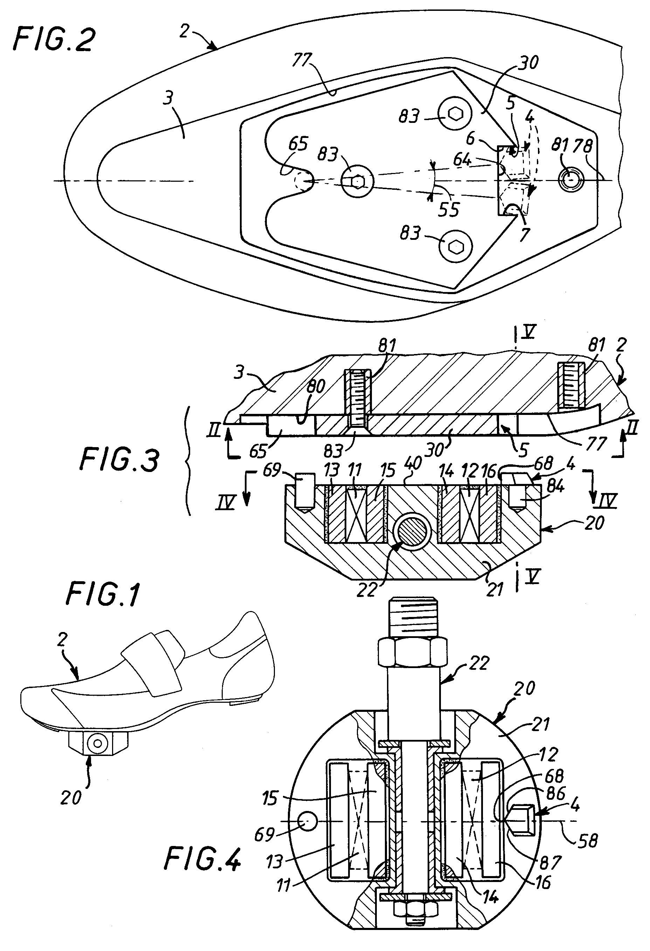

Les figures 1 à 7 montrent une première variante de dispositif de fixation selon l'invention pour solidariser une chaussure de cycliste 2 à une pédale 20.

La semelle 3 de la chaussure 2 porte une plaque métallique en métal magnétique 30, dite plaque de fermeture ; plus précisément, la chaussure 2 est une chaussure classique dont la semelle 3 en matière moulée présente un logement 77 ayant un fond 80 qu'affleurent des inserts 81 taraudés, utilisés pour la fixation par vissage de la plaque de fermeture 30 munie de trous pour sa fixation à la semelle 3 par des vis 83 vissées dans les inserts 81.

La pédale 20 est constituée d'un corps de pédale 21 porté à rotation par un axe de pédale 22 ; le corps de pédale 21 est en matière amagnétique telle qu'un métal ou alliage métallique léger, ou en matière plastique ; le corps de pédale 21 supporte deux aimants 11, 12 disposés de part et d'autre de l'axe de pédale 22 ; les aimants 11, 12 sont orientés de telle sorte que leur axe d'aimantation s'étend parallèlement à la plaque de fermeture 30 lorsque la chaussure 2 est placée sur la pédale 20 dans sa position opérationnelle ; dans l'exemple représenté, l'axe d'aimantation des aimants 11, 12 et l'axe de pédale 22 sont orthogonaux ; les pôles de chacun des aimants 11, 12 sont flanqués de plaques armatures, respectivement 13-15 et 14-16, en métal magnétique ; les plaques armatures 13, 15, 14, 16 recouvrent au moins complètement les pôles des aimants auxquels elles sont associées et affleurent par leur tranche supérieure la surface supérieure 40 du corps de pédale 21 à laquelle elles sont perpendiculaires ; le maintien des aimants et de leurs plaques armatures est obtenu par surmoulage du corps de pédale 21 ; en variante, les aimants et leurs plaques armatures sont placés dans des logements borgnes prévus dans le corps de pédale 21 et maintenus par collage ou par surmoulage d'une résine adhésive ; la plaque de fermeture 30 de la chaussure 2 a des dimensions telles que, lorsque la chaussure et la pédale 20 sont en prise opérationnelle l'une sur l'autre, la plaque de fermeture 30 recouvre au moins les aimants 11, 12 et les tranches supérieures des plaques armatures 13, 15, 14, 16 associées ; en position opérationnelle, la plaque de fermeture 30 est au contact des tranches supérieures des plaques armatures 13, 15, 14, 16 mais les aimants 11, 12 sont à distance de la plaque de fermeture 30.

La disposition qui vient d'être décrite présente l'avantage de mettre en jeu des forces d'attraction magnétique entre la chaussure et la pédale très importantes, et ce en utilisant des aimants 11, 12 de volume réduit ; à titre d'exemple, en utilisant deux aimants 11, 12 sous forme de pastilles paralléllépipèdiques de 31 x 11 x 5 millimètres en alliage métallique à base de Fer-Néodyme-Bore, la force d'attraction magnétique, donc de solidarisation de la chaussure 2 à la pédale 20, est d'au moins 60 Kg, ce qui est largement suffisant. Ceci est dû au fait que les lignes du champ magnétique développé par chacun des aimants se ferment à travers des matériaux métalliques magnétiques lorsque la chaussure 2 repose sur la pédale 20 : en effet, ces lignes depuis l'aimant 11 par exemple traversent successivement l'une des plaques armatures, la plaque armature 13 par exemple, la plaque de fermeture 30, et l'autre plaque armature, la plaque armature 15, pour rejoindre l'aimant 11 ; les lignes du champ magnétique correspondant à l'aimant 12 se ferment de manière analogue.

La chaussure 2 et la pédale 20 présentent des moyens d'éloignement, respectivement 5 et 4, du type à rampes.

Le moyen d'éloignement 4 de la pédale est réalisé sous forme d'une proéminence sur la face supérieure 40, de solidarisation, du corps de pédale 21, par laquelle il est amené à coopérer avec la chaussure 2 ; cette proéminence 4 est placée centrée sur l'axe longitudinal 58, figure 4, de la pédale 20, à la partie arrière de celle-ci, les chaussures et pédales représentées sur les dessins étant des chaussures et pédales gauches.

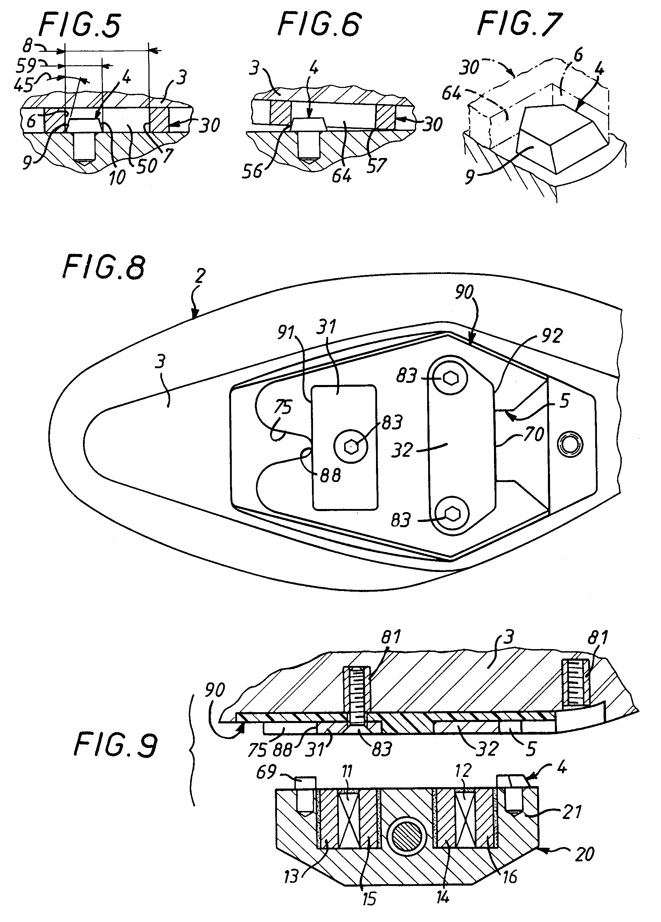

La proéminence 4, mieux visible sur les figures 5 à 7, a une forme générale de tronc de pyramide ; sa section par un plan transversal, c'est-à-dire par un plan parallèle à l'axe de l'axe de pédale 22, est trapézoïdale ; ainsi sont définies latéralement, de part et d'autre, deux faces inclinées 9 et 10, faisant, avec le plan vertical contenant l'axe 58, plus généralement avec le plan perpendiculaire à la surface supérieure 40 de la pédale 20 et passant par l'axe 58, un angle 45, avantageusement compris entre 5 et 25 degrés, de préférence de l'ordre de 8 à 15 degrés ; la proéminence 4 est symétrique par rapport audit plan, et au centre de sa face frontale, est définie une portée 68 à l'intersection de deux faces obliques 86, 87 qui sont inclinées sur l'axe 58 tout en étant perpendiculaires à la surface supérieure 40 ; selon l'exemple représenté, la proéminence 4 est rapportée et maintenue par une queue 84 surmoulée, mais bien entendu elle pourrait être obtenue d'une seule pièce avec le corps 21 par moulage.

Le moyen d'éloignement 5 de la chaussure 2 est en forme d'échancrure ouverte vers l'extrémité arrière de la chaussure 2, ménagée à l'arrière de la plaque de fermeture 30 et centrée sur l'axe longitudinal 78 de la chaussure 2 ; cette échancrure présente deux bords longitudinaux 6 et 7, et un bord transversal 64.

Lorsque la chaussure 2 est en place sur la pédale 20, la proéminence 4 de la pédale 20 est amenée à coopérer avec ladite échancrure : d'une part, la portée 68 de la proéminence 4 coopère, comme décrit plus en détail ci-dessous, avec le bord transversal 64, et, d'autre part, la largeur des bords longitudinaux 6 et 7 de l'échancrure est suffisante pour qu'ils puissent coopérer avec les faces inclinées 9 et 10 de la proéminence 4 ; comme cela est mieux visible sur la figure 5, les bords longitudinaux 6, 7 de l'échancrure sont à une distance 8 l'un de l'autre supérieure à la largeur maximum 59 de la proéminence 4 en sorte qu'est prévu un jeu transversal maximum 50 entre les moyens d'éloignement de pédale et de chaussure, à savoir la proéminence 4 de la pédale 20 et l'échancrure 5 de la chaussure 2.

Des moyens de butée franche sont prévus pour la venue en butée, dans les deux sens de la direction longitudinale, de la chaussure 2 sur l'appareil 20, c'est-à-dire vers l'avant et vers l'arrière, de façon à transmettre sans problème dans ces deux sens l'effort du pied à la pédale 20 pendant le pédalage ; l'effort vers l'arrière est transmis par le bord transversal 64 de l'échancrure 5 à la portée 68 de la proéminence 4 de la pédale 20 ; pour la transmission de l'effort vers l'avant, la plaque de fermeture 30 présente à l'avant une échancrure ou creusure 65 en forme de V curviligne à fond semi-circulaire et ouvert vers l'avant ; la creusure 65 est disposée symétriquement par rapport à l'axe longitudinal 78 de la semelle 3 de la chaussure 2 et adaptée à coopérer avec un élément de butée complémentaire 69, ici un pion 69 de section circulaire dont le diamètre est tel qu'au jeu de montage près il épouse le fond de la creusure 65. Ici également, le pion 69 a été représenté rapporté sur la pédale 20 mais bien entendu il pourrait également venir de moulage d'une seule pièce avec le corps 21 de la pédale 20. On appréciera qu'une telle creusure 65 constitue également un guide d'entrée facilitant la mise en place de la chaussure 2 sur la pédale 20.

Lorsque la chaussure 2 est en place sur la pédale 20, la plaque de fermeture 30 est au contact de la face supérieure 40, de solidarisation, du corps de pédale 21 ; le pion 69 est dans la creusure 65 et la proéminence 4 dans l'échancrure 5, avec un jeu transversal 50; la forme circulaire du pion 69 et du fond de la creusure 65 facilite une rotation, autour du pion 69, de la chaussure 2 par rapport à la pédale 20, dans le plan de la face 40 et dans la limite d'un angle 55 défini par le jeu 50, comme montré en traits mixtes sur la figure 2 ; ce jeu facilite un léger déplacement du pied par rapport à la pédale pendant l'opération de pédalage et permet une adaptation morphologique sans contrainte excessive ; on sait en effet que la fixation entre la chaussure 2 et la pédale 20, de nature magnétique, est maximum dans le sens perpendiculaire à la plaque de fermeture 30 mais relativement faible dans le sens du coulissement de ladite plaque de fermeture 30 sur la pédale 20; lorsque le jeu ci-dessus est rattrapé lors du pédalage dans un sens ou dans l'autre, la chaussure 2 est en butée tangentielle sur la pédale 20 grâce aux faces inclinées 9 et 10, de la proéminence 4 de la pédale 20, dont l'angle d'inclinaison 45 a été choisi pour que l'usager ne "déchausse" pas en pédalage.

Lorsque l'usager désire "déchausser", c'est-à-dire désolidariser la chaussure 2 de la pédale 20, il lui est facile de le faire malgré l'important effort d'attraction magnétique de solidarisation perpendiculaire à la surface 40 ; il lui suffit en effet d'effectuer une rotation du pied talon de la chaussure vers l'extérieur ; dans ce mouvement, la semelle 3 tourne dans le plan de solidarisation ; le jeu 50 étant rattrapé dans le sens de cette rotation, l'arête inférieure 56 ou 57 du bord concerné 6 ou 7 de l'échancrure 5 par coopération avec la face inclinée 9 ou 10 de la proéminence 4 permet de décoller la plaque de fermeture 30 de la pédale grâce à un effet de rampe dû à l'inclinaison 45 des faces inclinées ; la plaque de fermeture 30 n'étant plus plaquée sur la pédale 20, l'effort d'attraction magnétique diminue brutalement et la chaussure 2 et la pédale 20 sont séparées, comme montré sur la figure 6.

Le jeu 50 permettant de faciliter l'opération de pédalage autorise une rotation relative de la chaussure par rapport à la pédale d'un angle 55 ; cet angle est par exemple de l'ordre de 10 degrés, plus précisément de + ou - 5 degrés de part et d'autre de l'axe 78. Tel que décrit, le pion 69 dans la creusure 65 épouse relativement étroitement le fond de la creusure ; il est possible, bien entendu, si nécessaire, de donner à la chaussure une possibilité de débattement transversal par rapport à la pédale : il suffit pour cela d'élargir transversalement le fond de la creusure 65.

On appréciera la simplicité du dispositif de liaison selon la présente invention ; selon la variante qui vient d'être décrite, il suffit, côté chaussure, d'une plaque en métal magnétique 30 découpée comme décrit ci-dessus et reliée par vissage sur une chaussure classique ; on notera de plus que les moyens d'éloignement 5 et de butée franche 64-65 sont constitués par des bords de ladite plaque qui est métallique et ont donc une certaine résistance à l'usure; par ailleurs, la plaque ne présentant pas d'ouverture mais des échancrure et creusure en forme de V, ouvertes vers l'extérieur, lorsque l'usager marche sur un sol, même boueux, avec une chaussure ainsi équipée, il ne risque pas d'y accumuler des salissures, la chaussure étant ainsi d'un entretien très aisé.

Les figures 8 et 9 montrent une variante selon laquelle la plaque de fermeture est constituée de deux demi-plaques 31 et 32 limitées chacune au droit des aimants 11, 12 et de leurs plaques armatures 13, 15, 14, 16 associées, respectivement ; les demi-plaques 31 et 32 sont maintenues par surmoulage par une plaque support 90, avantageusement en matière plastique et solidarisée directement par vissage sur la semelle 3 de la chaussure 2 ; avantageusement, comme cela est visible sur les figures, les moyens de butée franche portés par la chaussure sont constitués par les bords des demi-plaques métalliques 31, 32 ; plus précisément, la creusure 75 est formée à l'avant de la plaque support 90 en matière plastique mais son fond 88 est constitué par une portion du bord avant 91 de la demi-plaque avant 31 ; l'échancrure 5 est formée à l'arrière de la plaque support 90 mais son bord transversal 70 est constitué par une portion du bord arrière 92 de la demi-plaque arrière 32.

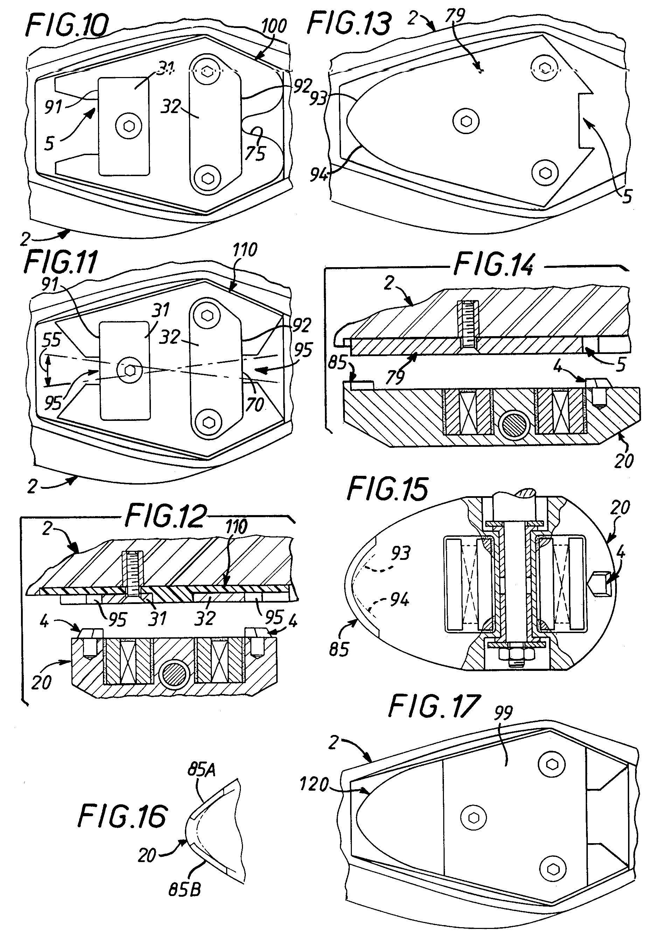

La figure 10 montre une autre variante de dispositif de liaison ; selon cette variante, une plaque support 100 portée par la chaussure est analogue à la plaque support 90 décrite précédemment sauf que la creusure 75 est à l'arrière de la chaussure 2 tandis que l'échancrure 5 est à l'avant ; bien entendu, une telle chaussure ainsi équipée coopère avec une pédale, non représentée, dans laquelle les positions de la proéminence 4 et du pion 69 ont été également inversées; dans le cas d'une telle variante, l'usager pour "déchausser" devra effectuer une rotation du pied extrémité avant de la chaussure vers l'extérieur.

Il est possible de prévoir la possibilité de "déchausser" quel que soit le sens de la rotation du pied sur la pédale ; la variante selon les figures 11 et 12 le permet. Selon une telle variante, une plaque support 110 comporte deux demi-plaques 31, 32 analogues aux demi-plaques déjà décrites ; il est prévu deux groupes de moyens d'éloignement placés à l'avant et à l'arrière de la plaque 110, d'une part, et à l'avant et à l'arrière de la pédale 20, d'autre part ; ainsi la plaque support 110 présente deux échancrures 95, une à l'avant et une à l'arrière ; ces échancrures 95 sont destinées à coopérer avec une pédale 20 qui porte deux protubérances 4 identiques, une à l'avant, une à l'arrière qui se font face ; la largeur des échancrures 95 est bien entendu plus petite que celle des échancrures 5 précédemment décrites pour maintenir l'angle 55 de pivotement, de la chaussure par rapport à la pédale, dans les valeurs évoquées précédemment ; en effet, le centre de rotation de la chaussure par rapport à la pédale est situé dans la région centrale de la plaque support 110 ; pour "déchausser", dans un premier temps, une rotation dans un sens amène l'une des faces inclinées d'une proéminence 4 au contact d'un bord d'une échancrure 95, en un point qui joue alors le rôle de pivot pour que, dans un deuxième temps, la face inclinée opposée de l'autre proéminence vienne au contact du bord opposé de l'autre échancrure, l'effet de rampe étant alors obtenu, en poursuivant le mouvement de rotation, sur l'un et/ou l'autre des moyens d'éloignement ; selon cette variante, les moyens de butée franche sont constitués par, d'une part, les bords transversaux des échancrures 95 et, d'autre part, les portées tournées vers l'intérieur des proéminences 4.

Selon la variante des figures 13 à 15, la chaussure 2 est du genre de celle de la figure 2 mais la plaque de fermeture 79 s'étend plus en avant de la chaussure ; sa partie avant est conformée en extrémité convexe définie par deux flancs arqués 93, 94 et constituant le moyen de butée franche avant de chaussure, adapté à coopérer avec une creusure 85, également arquée, portée, selon cette variante, par la pédale 20 ; comme le montre la figure 15, l'angle embrassé par la creusure 85 est plus ouvert que celui qui est embrassé par les flancs arqués 93, 94 pour permettre le débattement angulaire relatif, de la chaussure par rapport à la pédale, décrit ci-dessus ; comme le montre également la figure 15, la creusure 85 est continue ; selon la variante de la figure 16 elle est discontinue et constituée de deux demi-creusures latérales 85A, 85B.

Selon la variante de la figure 17, la chaussure est du genre de celle de la figure 13 sauf que, comme sur les figures 8 à 12, une plaque support 120, en matière plastique, supporte par surmoulage une plaque de fermeture 99 en métal magnétique limitée au droit des moyens d'aimant.

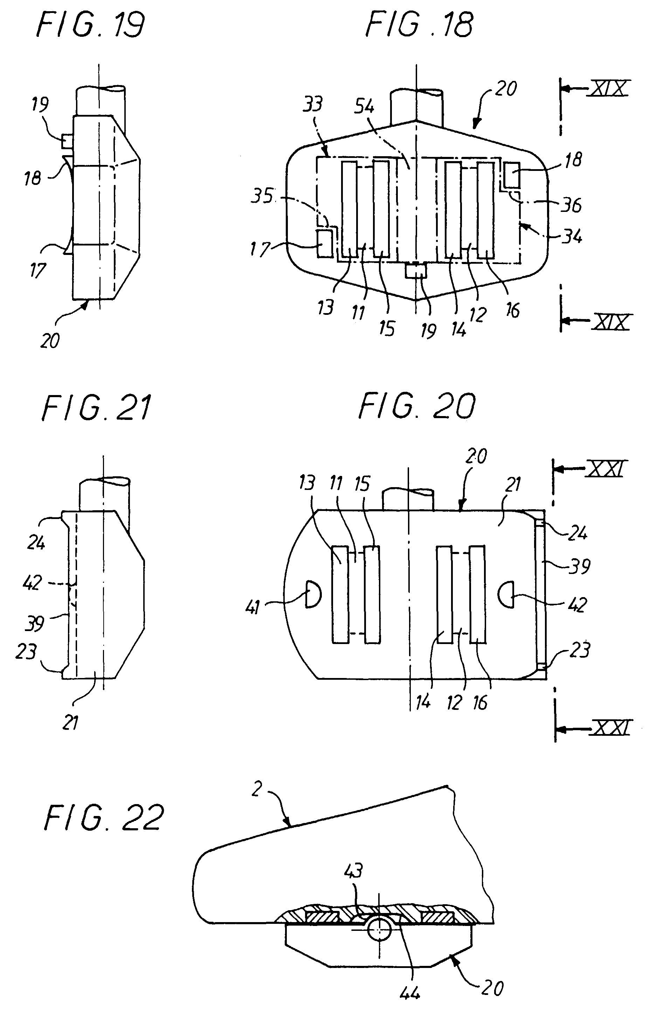

En se reportant aux figures 18 et 19, on voit une autre variante de dispositif selon laquelle les moyens d'éloignement 17, 18 portés par la pédale sont disposés diagonalement par rapport à la pédale 20, ce qui permet d'augmenter encore leur distance ; ils sont réalisés sous forme de portées cylindriques de cames dont la hauteur, par rapport au plan de solidarisation de la pédale 20, croît au fur et à mesure que l'on se déplace vers l'extérieur de la pédale; la chaussure, non représentée sur ces figures, porte deux demi-plaques de fermeture évoquées par des traits mixtes 33, 34 sur la figure 8 ; ces deux demi-plaques 33, 34 de fermeture n'affleurent pas la surface extérieure de la semelle de la chaussure, comme dans les variantes décrites jusqu'ici, mais dépassent de la semelle sous la chaussure ; chacune des demi-plaques 33, 34 s'étend au droit des aimants 11, 12 et de leurs plaques armatures 13-15, 14-16 associées et même au delà en direction des moyens d'éloignement 17, 18 de pédale en sorte qu'elle présente un bord 35, 36 suiveur de came destiné à coopérer avec les portées de came des moyens d'éloignement 17, 18 de pédale : ce sont ces bords 35, 36 suiveurs de came qui constituent les moyens d'éloignement de chaussure ; une butée latérale 19 est prévue et coopère avec le bord de la matière, référencée 54 sur la figure, de la semelle de la chaussure qui remplit l'intervalle compris entre les deux demi-plaques 33, 34 d'armature ; cette butée 19 permet d'éviter le déplacement latéral du pied sous effort.

Les figures 20 et 21 montrent une pédale 20 dont le corps 21 est muni à l'arrière d'un rebord d'accès 39 s'étendant sur la largeur de la pédale 20 et au dessus du plan de solidarisation de la pédale ; un tel rebord d'accès 39 facilite la mise en place de la chaussure sur la pédale ; en effet, la chaussure étant approchée de la pédale depuis la droite vers la gauche par rapport à la figure 10, un tel rebord d'accès 39 évite que la plaque de fermeture de la chaussure ne se plaque magnétiquement dans cette phase d'approche sur les moyens magnétiques constitués par l'aimant 12 et ses plaques armatures 14, 16, ce qui gênerait la poursuite du mouvement de la chaussure par rapport à la pédale ; en effet, le rebord d'accès 39 donne lieu à l'existence d'un entrefer entre la chaussure et la pédale, plus précisément entre la plaque de fermeture et lesdits moyens magnétiques, tant que l'ensemble chaussure-pédale n'est pas en place, ce qui minimise l'effort d'attraction magnétique et facilite la mise en place de la chaussure sur la pédale.

La disposition selon laquelle les aimants 11, 12 et leurs plaques armatures 13-15, 14-16 associées ne sont pas au droit de l'axe de la pédale permet de placer celui-ci le plus près possible de la surface de solidarisation, ce qui, comme on le sait, est très favorable sur le plan de l'effort de pédalage. La figure 22 montre qu'il est même possible de faire couper l'axe de pédale par le plan de solidarisation ; le fourreau 43 cylindrique d'axe de pédale s'étend en partie au dessus dudit plan et est reçu avec un jeu transversal dans un logement cylindrique 44 prévu dans la semelle de chaussure ; on peut noter que lors de la rotation du pied en vue de "déchausser" un effet de rampe est obtenu par coopération de la surface extérieure du fourreau 43 avec la surface intérieure du logement cylindrique 44, effet de rampe qui vient renforcer celui obtenu par les moyens d'éloignement non représentés sur la figure.

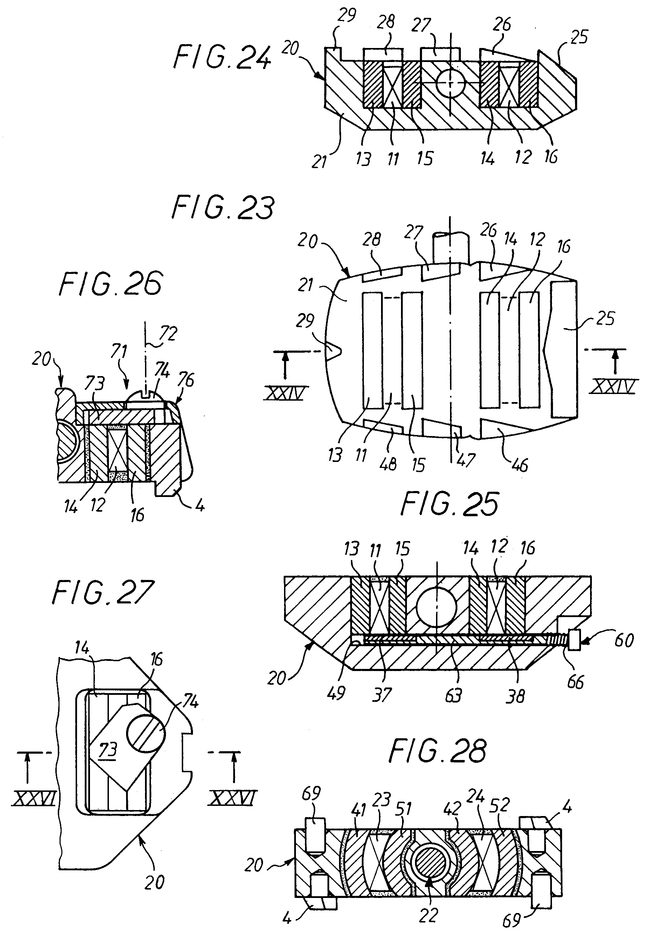

Les figures 23 et 24 montrent une variante de moyens d'éloignement portés par la pédale 20 ; ces moyens sont constitués de rampes 26, 28, 46, 48 disposées latéralement selon approximativement les deux diagonales, respectivement 26, 48 et 28, 46 ; le dispositif de fixation selon ces figures fonctionne de manière analogue à celui des figures 18 et 19, mais présente l'avantage par rapport à ce dernier que la désolidarisation de la chaussure et de la pédale peut être obtenue quel que soit le sens de la rotation relative appliquée à la chaussure. On notera, de plus, que la pédale selon ces figures 23 et 24 présente à l'arrière une rampe d'accès 25 et à l'avant une butée frontale 29 destinée à coopérer avec une contre-butée portée par la chaussure non représentée ; des guides latéraux 27, 47 favorisent le bon positionnement de la chaussure par rapport à la pédale lors de son mouvement d'approche ; ces guides latéraux 27, 47 sont également sous forme de rampes; ils peuvent, dès lors, eux aussi participer à l'éloignement de la chaussure par rapport à la pédale lors du déchaussement.

La figure 25 montre que le dispositif selon l'invention est tel qu'il est possible de le doter, de manière simple, d'un moyen de réglage 60 de la force magnétique de solidarisation, mettant ainsi à la disposition de l'usager un moyen d'adapter la force de solidarisation, de la chaussure à la pédale, selon ses besoins. Le moyen de réglage 60 est constitué d'un coulisseau 63 monté à coulissement dans un logement 49 transversal intérieur du corps de la pédale 20 disposé sous les aimants 11, 12 et les bords inférieurs de leurs plaques armatures associées 13-15, 14-16 ; le coulissement, dans un sens ou dans l'autre, du coulisseau 63 dans le logement 49 est obtenu en tournant une vis 66 de réglage, dans un sens ou dans l'autre, ladite vis étant attelée au coulisseau 63 et coopérant avec un taraudage correspondant prévu dans le corps de pédale : le coulisseau 63 est en matériau amagnétique et porte deux plaques de dérivation 37, 38 en matériau magnétique ; ces plaques de dérivation 37, 38 sont solidarisées au coulisseau par collage, surmoulage, rivetage ou par tout autre moyen ; elles sont disposées l'une par rapport à l'autre et ont des dimensions telles qu'elles sont susceptibles, dans la position la plus à gauche, par rapport à la figure 13, du coulisseau 63 dans son logement 49, de recouvrir complètement les amants 11, 12 et les bords inférieurs de leurs plaques armatures associées 13-15, 14-16.

Comme on le comprendra aisément, en fonction de la position du coulisseau 63, un certain nombre de lignes de forces, correspondant au champ magnétique développé par les aimants 11, 12, se ferment par les plaques de dérivation 37, 38 au lieu de se fermer par la plaque, ou les demi-plaques, de fermeture de la chaussure ; ainsi, par soustraction de certaines d'entre elles, il est possible de limiter, ou par addition, d'accroître, le nombre de lignes de forces participant à l'effort magnétique de solidarisation de la chaussure à la pédale, et donc de régler celui-ci.

Les figures 26 et 27 montrent une variante de moyen de réglage de la force magnétique de solidarisation ; selon cette variante, le moyen de réglage 71 comprend une plaquette de dérivation 73 en métal magnétique montée tournante autour d'un axe 72 en étant maintenue par un capot 76 en matériau amagnétique que traverse une tête de réglage 74 solidaire de la plaquette de dérivation 73 et en forme de tête de vis pour sa préhension ; en faisant tourner la tête de réglage 74 dans un sens ou dans l'autre, la plaquette de dérivation 73 occupe diverses positions pour lesquelles elle recouvre plus ou moins les bords inférieurs des plaques armatures 14 et 16 qui entourent l'aimant 12 ou ne couvre que la plaque armature 16.

La figure 28 montre une variante de pédale selon laquelle les aimants 23, 24 et leurs plaques armatures associées, respectivement 41-51 et 42-52, ont une forme cylindrique à section circulaire centrée par rapport à l'axe de pédale 22 ; cette disposition permet si besoin est de limiter l'encombrement longitudinal, c'est-à-dire en longueur, de la pédale. Selon cette variante également, les faces supérieure et inférieure de la pédale sont identiques ; plus exactement, la moitié inférieure de la pédale se déduit de la moitié supérieure par rotation de 180 degrés autour de l'axe de pédale 22, en sorte que chacune des faces de la pédale 20 est une face de solidarisation : cette disposition facilite la préhension de la pédale 20 rendue ainsi réversible puisque son sens est indifférent.

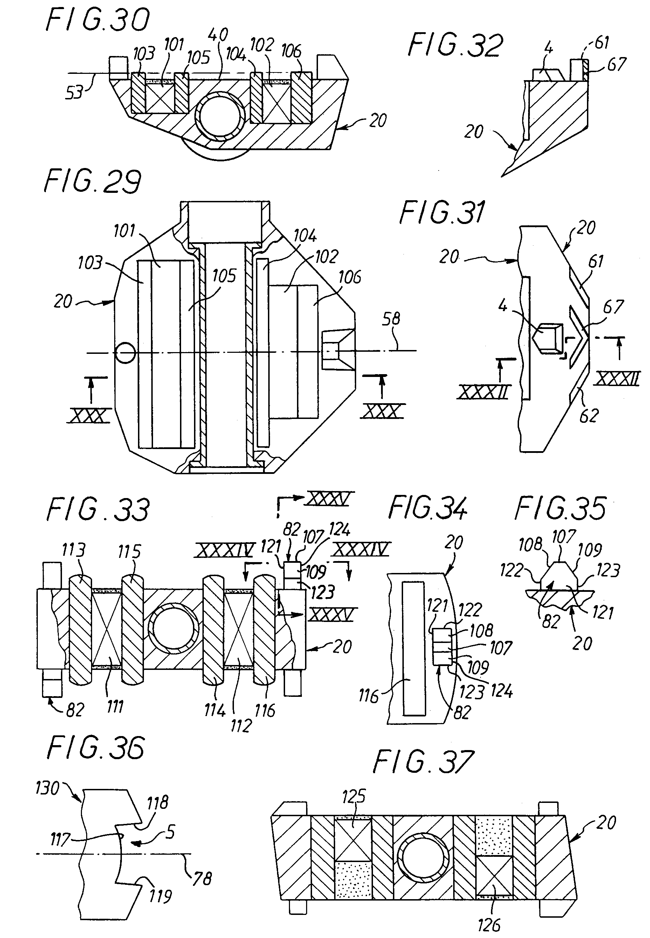

Les figures 29 et 30 montrent une autre variante de pédale selon laquelle les aimants 101 et 102 sont différents ; comme on le voit, l'aimant 102 est moins long et plus haut que l'aimant 101. Les plaques armatures associées aux aimants peuvent avoir la même longueur que celle des aimants, comme ici les plaques armatures 103, 105 et 106, ou une longueur supérieure, comme ici la plaque armature 104 ; avantageusement les sections de travail des plaques armatures associées à un aimant, à savoir les produits de leur longueur par leur épaisseur, sont égales. Grâce à ces dispositions, la pédale est plus aisément adaptable à la forme de la chaussure.

La figure 30 montre par ailleurs que la face de solidarisation de la pédale peut être constituée par les bords supérieurs des plaques armatures qui dépassent de la face supérieure 40 du corps de pédale en étant dans un même plan 53 ; cette disposition peut permettre à certaines salissures portées par la chaussure de moins affecter la coopération des bords supérieurs des plaques armatures avec la plaque de fermeture de chaussure, ces salissures pouvant prendre place entre ladite plaque de fermeture et la pédale, entre les plaques armatures.

Lorsque les salissures sont plus importantes, comme de la boue par exemple, ce qui est fréquent lorsqu'on utilise un vélo tout terrain, la pédale est avantageusement munie d'un décrottoir ; un exemple d'une telle pédale est montré sur les figures 31 et 32 ; le décrottoir est ici constitué de rebords, deux rebords latéraux 61, 62 légèrement inclinés par rapport à l'axe longitudinal 58 de la pédale et disposés symétriquement par rapport audit axe, et un rebord central 67 en forme de V centré sur l'axe 58 dont la pointe est dirigée vers l'arrière et les ailes disposées parallèlement aux rebords latéraux 61, 62 ; les rebords 61, 62 et 67 sont plus hauts que le moyen d'éloignement 4 de pédale.

Les figures 33 à 35 montrent une autre variante de pédale ; celle-ci est du type réversible, comme décrit à propos de la figure 28 ; ici, les plaques armatures 113-115 et 114-116, associées respectivement aux aimants 111 et 112, dépassent du corps de pédale, comme décrit à propos de la figure 30, mais leurs bords supérieurs sont cylindriques, à section arrondie : cette disposition permet d'assurer un bon contact selon une génératrice avec la plaque de fermeture de la chaussure même en présence d'éventuelles salissures.

Les figures 33 à 35 montrent également une variante de moyen d'éloignement porté par la pédale ; ce moyen d'éloignement 82, également applicable à toute variante de pédale et non seulement à celle de ces figures, est un petit bloc parallélépipédique dressé à la surface du corps de pédale et comportant une face frontale 121 perpendiculaire à ladite surface et parallèle à l'axe de pédale, une face dorsale 124 parallèle à la face frontale 121, une face supérieure 107 parallèle à ladite surface, les angles formés par les faces latérales 122, 123, d'une part, et la face supérieure 107, d'autre part, respectivement, étant cassés par des faces obliques 108, 109 perpendiculaires aux faces frontale 121 et dorsale 124 ; en variante non représentée, les faces obliques 108, 109 font un angle avec lesdites faces frontale 121 et dorsale 124 ; la face frontale 121 joue le rôle de la portée 68 en forme d'arête des variantes précédentes.

La figure 36 montre une variante de plaque de fermeture portée par la chaussure ; selon cette variante, la plaque de fermeture 130 présente à l'arrière un moyen d'éloignement 5 en forme d'échancrure centrée sur l'axe longitudinal 78 de chaussure, ladite échancrure ayant des bords 118, 119 qui ne sont pas parallèles audit axe 78 mais forment entre eux un V légèrement ouvert vers l'extérieur ; avantageusement, les prolongements des bords latéraux 118, 119 se coupent au droit de la creusure avant de la plaque de fermeture, c'est-à-dire au droit du pion 69 de pédale, figures 1 à 9, lorsque la pédale et la chaussure coopèrent. Par ailleurs, le bord transversal 117 de l'échancrure n'est pas perpendiculaire à l'axe 78 mais légèrement en forme de courbe dont la convexité est dirigée vers l'extérieur.

Sur la figure 37 est représentée une variante de pédale du type réversible mais dans laquelle les aimants 125, 126 ne s'étendent pas d'une face à l'autre du bloc de pédale mais chacun d'eux est proche d'une face et éloigné de l'autre.

On a décrit une chaussure dont la semelle comporte un logement pour recevoir une plaque de fermeture ou de support ; bien entendu, il est possible d'appliquer l'invention à une chaussure ne comportant pas de logement : dans ce cas, ces plaques sont rapportées directement sur la semelle dont elles dépassent.

Les plaques de fermeture de toutes les variantes décrites ci-dessus sont rapportées sur la chaussure, directement ou par l'intermédiaire d'une plaque support; en variantes non représentées, elles sont portées directement, par construction, par la semelle de la chaussure, par surmoulage par exemple ; ce surmoulage peut être facilité en prévoyant la (ou les) plaque(s) de fermeture en métal magnétique fritté permettant d'obtenir des formes particulières favorisant l'ancrage de la (ou des) plaque(s) dans la matière de surmoulage.

Comme cela a été dit précédemment, l'invention s'applique également à d'autres appareils qu'une pédale de bicyclette, tels que par exemple un ski ; s'il s'agit d'un ski de fond, par exemple, bien entendu le dispositif est alors prévu en bout de la chaussure de ski.

Bien entendu, l'invention ne se limite pas à la forme de réalisation décrite et représentée mais englobe toute variante d'exécution. Par exemple, le plan des aimants des variantes décrites s'étend parallèlement à l'axe de pédale; bien entendu, il pourrait faire un angle avec ledit axe, voir lui être perpendiculaire.

## Revendications

1. Dispositif de fixation d'une chaussure (2) à un appareil (20), ledit dispositif comportant au moins un moyen d'aimant (11, 12, 23, 24, 101, 102, 111, 112, 125, 126) solidaire de l'appareil (20) et une plaque de fermeture (30, 31-32, 33-34, 130) en métal magnétique solidaire de la chaussure (2), caractérisé par le fait que les pôles du moyen d'aimant (11, 12, 23, 24, 101, 102, 111, 112, 125, 126) sont flanqués chacun d'une plaque armature (13-15, 14-16, 41-51, 42-52, 103-105, 104-106, 113-115, 114-116) en métal magnétique, les deux plaques armatures (13-15, 14-16, 41-51, 42-52, 103-105, 104-106, 113-115, 114-116) coopérant avec la plaque de fermeture (30, 31-32, 33-34, 130) pour la fermeture du champ magnétique.

2. Dispositif selon la revendication 1, caractérisé par le fait que l'axe d'aimantation du moyen d'aimant (11, 12, 23, 24, 101, 102, 111, 112, 125, 126) s'étend parallèlement à la plaque de fermeture (30, 31-32, 33-34, 130).

3. Dispositif selon l'une des revendications 1 ou 2, caractérisé par le fait que l'axe d'aimantation du moyen d'aimant (11, 12, 23, 24, 101, 102, 111, 112, 125, 126) est parallèle à l'axe longitudinal de l'appareil (20) qui est lui-même parallèle à l'axe longitudinal de la chaussure (2) lorsque celle-ci est fixée sur l'appareil (20).

4. Dispositif selon l'une des revendications 1 à 3, caractérisé par le fait que sont prévus deux moyens d'aimant (11, 12, 23, 24, 101, 102, 111, 112, 125, 126) disposés à distance l'un de l'autre.

5. Dispositif selon la revendication 4, caractérisé par le fait que la plaque de fermeture (31-32, 33-34) est composée de deux demi-plaques, chacune étant au droit d'un moyen d'aimant (11, 12, , 23, 24, 101, 102, 111, 112, 125, 126) et de ses plaques armatures (13-15, 14-16, 41-51, 42-52, 103-105, 104-106, 113-115, 114-116) associées.

6. Dispositif selon l'une des revendications 1 à 5, caractérisé par le fait que les plaques armatures (41-51, 42-52, 113-115, 114-116) traversent le corps de pédale.

7. Dispositif selon l'une des revendications 1 à 5, caractérisé par le fait que les bords d'extrémité des plaques armatures (103-105, 104-106, 113-115, 114-116) sont en proéminence par rapport au corps de pédale et définissent le plan de solidarisation.

8. Dispositif selon la revendication 7, caractérisé par le fait que les bords d'extrémité des plaques armatures (113-115, 114-116) sont cylindriques.

9. Dispositif selon la revendication 4 et l'une quelconque des revendications 5 à 8, caractérisé par le fait que les deux moyens d'aimant (101, 102) sont en forme de parallélépipèdes de dimensions différentes.

10. Dispositif selon l'une des revendications 1 à 9, caractérisé par le fait que les plaques armatures (104, 106) associées à un même aimant (102) ont des dimensions différentes et ont des sections transversales égales ou presque égales.

11. Dispositif selon l'une des revendications 1 à 10, caractérisé par le fait que les plaques armatures (41-51, 42-52) et les moyens d'aimant (23, 24) ont une forme cylindrique à section circulaire centrée sur l'axe de pédale.

12. Dispositif selon la revendication 4 et l'une quelconque des revendications 5 à 11, caractérisé par le fait que chacun des moyens d'aimant (125, 126) est proche d'une face du corps de pédale et éloignée de l'autre face, la pédale étant réversible.

13. Dispositif selon l'une des revendications 1 à 12, caractérisé par le fait que le dispositif comporte un moyen d'éloignement (5, 35, 36), porté par l'un des éléments, appareil (20) ou chaussure (2), coopérant avec un moyen d'éloignement complémentaire (4, 17, 18, 26, 28, 46, 48) porté par l'autre élément, lesdits moyens d'éloignement permettant de provoquer l'éloignement de la chaussure (2) par rapport à l'appareil (20) dans le sens d'une augmentation de l'entrefer magnétique à partir de la position qui correspond à la solidarisation de la chaussure (2) et de l'appareil (20),

14. Dispositif selon la revendication 13, caractérisé par le fait que les moyens d'éloignement (17, 18) portés par l'appareil (20) sont en forme de portées de cames disposées selon un axe faisant un angle avec l'axe longitudinal tandis que les moyens d'éloignement (35, 36) portés par la chaussure sont constitués par des bords, suiveurs de came, de la plaque de fermeture (33-34) qui dépasse de la semelle (3) de la chaussure (2).

15. Dispositif selon la revendication 13, caractérisé par le fait que les moyens d'éloignement (26, 28, 46, 48) portés par l'appareil (20) sont constitués par des rampes disposées latéralement.

16. Dispositif selon la revendication 13, caractérisé par le fait que l'un des moyens d'éloignement (4) est en proéminence par rapport à la face (40) de l'élément par laquelle il coopère avec l'autre élément, l'autre moyen d'éloignement (5) comprenant une échancrure ouverte vers l'une des extrémités longitudinales de l'élément, ledit l'un des moyens d'éloignement (4) étant disposé sur, ou au voisinage de, l'axe longitudinal (58) de l'élément et adapté à coopérer avec les bords (6, 7, 118, 119) de ladite échancrure.

17. Dispositif selon la revendication 16, caractérisé par le fait que ledit l'un des moyens d'éloignement (4) coopère avec jeu (50) avec les bords (6, 7, 118, 119) de l'échancrure qui sont à une distance (8) l'un de l'autre supérieure à la largeur maximum (59) dudit l'un des moyens d'éloignement (4).

18. Dispositif selon l'une des revendications 16 ou 17, caractérisé par le fait que les bords (6, 7) de l'échancrure s'étendent longitudinalement.

19. Dispositif selon l'une des revendications 16 ou 17, caractérisé par le fait que les bords (118, 119) de l'échancrure forment entre eux un V légèrement ouvert vers l'extérieur.

20. Dispositif selon l'une des revendications 16 à 19, caractérisé par le fait que, pour la coopération entre eux des moyens d'éloignement (5, 4) portés respectivement par la chaussure (2) et par l'appareil (20), l'un (4) des moyens d'éloignement présente au moins une face inclinée (9, 10) de coopération faisant un angle (45) avec un plan vertical, l'autre (5) moyen d'éloignement comportant une arête (56, 57) coopérant avec ladite face inclinée (9, 10).

21. Dispositif selon la revendication 20, caractérisé par le fait que ledit plan vertical est parallèle, ou voisin d'un plan parallèle, au plan vertical passant par l'axe longitudinal (58) de l'élément, ladite arête (56, 57) étant portée par un bord (6, 7, 118 119) de ladite échancrure.

22. Dispositif selon l'une des revendications 16 à 21, dispositif dans lequel des moyens de butée franche sont prévus pour la venue en butée, dans les deux sens de la direction longitudinale, de la chaussure (2) sur l'appareil (20), caractérisé par le fait que l'un desdits moyens de butée franche pour l'un desdits sens est constitué par le bord (64, 117) transversal de l'échancrure (5) qui est adapté à coopérer avec une portée (68, 121) ménagée sur le moyen d'éloignement complémentaire (4) de l'élément et disposée en regard dudit bord transversal (64, 117), sur, ou au voisinage de, l'axe longitudinal (58) dudit élément.

23. Dispositif selon la revendication 22, caractérisé par le fait que l'autre desdits moyens de butée franche pour l'autre desdits sens est constitué par une creusure (65, 75, 85) en forme de V ouvert portée par l'un des éléments et avec laquelle coopère un élément de butée complémentaire (69, 93-94) porté par l'autre élément.

24. Dispositif selon la revendication 23, caractérisé par le fait que l'élément de butée complémentaire (69) est un pion.

25. Dispositif selon la revendication 23, caractérisé par le fait que l'élément de butée complémentaire (93-94) est en forme de V.

26. Dispositif selon l'une des revendications 16 à 25, caractérisé par le fait que l'échancrure (5) est ménagée dans la plaque de fermeture (30, 130).

27. Dispositif selon la revendication 23, caractérisé par le fait que la creusure (65, 75) est portée par la chaussure (2) et en forme de V ouvert du côté opposé à celui de l'échancrure (5).

28. Dispositif selon la revendication 23, caractérisé par le fait que la creusure (85) est portée par l'appareil (20) et en forme de V ouvert du même côté que celui de l'échancrure (5).

29. Dispositif selon l'une des revendications 1 à 28, caractérisé par le fait que le dispositif comporte un moyen de réglage (60, 74) de la force magnétique de solidarisation.

30. Dispositif selon l'une des revendications 1 à 29, caractérisé par le fait que la pédale est munie à l'arrière d'un décrottoir (61-62-67).

31. Dispositif selon l'une des revendications 1 à 30, caractérisé par le fait que le dispositif de fixation est prévu entre une pédale de bicyclette et une chaussure de cycliste.

32. Dispositif selon l'une des revendications 1 à 30, caractérisé par le fait que le dispositif de fixation est prévu entre un ski et une chaussure de ski.

## Claims

1. An arrangement for fixing a boot or shoe (2) to a device (20), said arrangement comprising at least one magnet means (11, 12, 23, 24, 101, 102, 111, 112, 125, 126) which is fixed with respect to the device (20) and a closure plate (30, 31-32, 33-34, 130) of magnetic metal which is fixed with respect to the boot or shoe (2), characterised in that the poles of the magnet means (11, 12, 23, 24, 101, 102, 111, 112, 125, 126) are each flanked by an armature plate (13-15, 14-16, 41-51, 42-52, 103-105, 104-106, 113-115, 114-116) of magnetic metal, the two armature plates (13-15, 14-16, 41-51, 42-52, 103-105, 104-106, 113-115, 114-116) co-operating with the closure plate (30, 31-32, 33-34, 130) for closure of the magnetic field.

2. An arrangement according to claim 1 characterised in that the magnetisation axis of the magnet means (11, 12, 23, 24, 101, 102, 111, 112, 125, 126) extends parallel to the closure plate (30, 31-32, 33-34, 130).

3. An arrangement according to one of claims 1 and 2 characterised in that the magnetisation axis of the magnet means (11, 12, 23, 24, 101, 102, 111, 112, 125, 126) is parallel to the longitudinal axis of the device (20) which is itself parallel to the longitudinal axis of the boot or shoe (2) when same is fixed to the device (20).

4. An arrangement according to one of claims 1 to 3 characterised in that there are provided two magnet means (11, 12, 23, 24, 101, 102, 111, 112, 125, 126) disposed at a spacing from each other.

5. An arrangement according to claim 4 characterised in that the closure plate (31-32, 33-34) is composed of two half-plates each being in line with a magnet means (11, 12, 23, 24, 101, 102, 111, 112, 125, 126) and its associated armature plates (13-15, 14-16, 41-51, 42-52, 103-105, 104-106, 113-115, 114-116).

6. An arrangement according to one of claims 1 to 5 characterised in that the armature plates (41-51, 42-52, 113-115, 114-116) pass through the pedal body.

7. An arrangement according to one of claims 1 to 5 characterised in that the end edges of the armature plates (103-105, 104-106, 113-115, 114-116) are protruding with respect to the pedal body and define the fixed mounting plane.

8. An arrangement according to claim 7 characterised in that the end edges of the armature plates (113-115, 114-116) are cylindrical.

9. An arrangement according to claim 4 and any one of claims 5 to 8 characterised in that the two magnet means (101, 102) are in the form of parallelepipeds of different dimensions.

10. An arrangement according to one of claims 1 to 9 characterised in that the armature plates (104, 106) associated with the same magnet (102) are of different dimensions and are of equal or almost equal cross-sections.

11. An arrangement according to one of claims 1 to 10 characterised in that the armature plates (41-51, 42-52) and the magnet means (23, 24) are of a cylindrical shape with a circular section centred on the pedal spindle.

12. An arrangement according to claim 4 and any one of claims 5 to 11 characterised in that each of the magnet means (125, 126) is close to one face of the pedal body and remote from the other face, the pedal being reversible.

13. An arrangement according to one of claims 1 to 12 characterised in that the arrangement comprises a removal means (5, 35, 36) carried by one of the elements, the device (20) or the boot or shoe (2), and co-operating with a complementary removal means (4, 17, 18, 26, 28, 46, 48) carried by the other element, said removal means making it possible to cause movement of the boot or shoe (2) away from the device (20) in the direction of an increase in the magnetic air gap from the position which corresponds to fixing of the boot or shoe (2) and the device (20).

14. An arrangement according to claim 13 characterised in that the removal means (17, 18) carried by the device (20) are in the form of cam surfaces disposed on an axis forming an angle with the longitudinal axis while the removal means (35, 36) carried by the boot or shoe are formed by cam-follower edges of the closure plate (33-34) which extends beyond the sole (3) of the boot or shoe (2).

15. An arrangement according to claim 13 characterised in that the removal means (26, 28, 46, 48) carried by the device (20) are formed by laterally disposed ramps.

16. An arrangement according to claim 13 characterised in that one of the removal means (4) is in protruding relationship with respect to the face (40) of the element, by way of which it co-operates with the other element, the other removal means (5) comprising an opening open towards one of the longitudinal ends of the element, said one of the removal means (4) being disposed on or in the vicinity of the longitudinal axis (58) of the element and adapted to cooperate with the edges (6, 7, 118, 119) of said opening.

17. An arrangement according to claim 16 characterised in that one of the removal means (4) co-operates with clearance (50) with the edges (6, 7, 118, 119) of the opening which are at a spacing (8) from each other that is greater than the maximum width (59) of said one of the removal means (4).

18. An arrangement according to one of claims 16 and 17 characterised in that the edges (6, 7) of the opening extend longitudinally.

19. An arrangement according to one of claims 16 and 17 characterised in that the edges (118, 119) of the opening form relative to each other a V which is slightly open towards the exterior.

20. An arrangement according to one of claims 16 to 19 characterised in that, for the mutual co-operation of the removal means (5, 4) respectively carried by the boot or shoe (2) and by the device (20), one (4) of the removal means has at least one inclined co-operation face (9, 10) forming an angle (45) with a vertical plane, the other removal means (5) comprising an edge portion (56, 57) co-operating with said inclined face (9, 10).

21. An arrangement according to claim 20 characterised in that said vertical plane is parallel to or close to a plane parallel to the vertical plane passing through the longitudinal axis (58) of the element, said edge portion (56, 57) being carried by an edge (6, 7, 118, 119) of said opening.

22. An arrangement according to one of claims 16 to 21, in which arrangement defined-abutment means are provided for the boot or shoe (2) to come into a condition of abutment against the device (20) in both ways in the longitudinal direction, characterised in that one of said defined-abutment means for one of said ways is formed by the transverse edge (64, 117) of the opening (5), which is adapted to co-operate with a surface (68, 121) provided on the complementary removal means (4) of the element and disposed in facing relationship with said transverse edge (64, 117) on or in the vicinity of the longitudinal axis (58) of said element.

23. An arrangement according to claim 22 characterised in that the other of said defined-abutment means for the other of said ways is formed by a recess (65, 75, 85) in the form of an open V and carried by one of the elements and with which there co-operates a complementary abutment element (69, 93-94) carried by the other element.

24. An arrangement according to claim 23 characterised in that the complementary abutment element (69) is a stud.

25. An arrangement according to claim 23 characterised in that the complementary abutment element (93-94) is of a V-shape.

26. An arrangement according to one of claims 16 to 25 characterised in that the opening (5) is provided in the closure plate (30, 130).

27. An arrangement according to claim 23 characterised in that the recess (65, 75) is carried by the boot or shoe (2) and is in the form of a V open on the side opposite to that of the opening (5).

28. An arrangement according to claim 23 characterised in that the recess (85) is carried by the device (20) and is in the form of a V open on the same side as that of the opening (5).

29. An arrangement according to one of claims 1 to 28 characterised in that the arrangement comprises a means (60, 74) for regulating the magnetic securing force.

30. An arrangement according to one of claims 1 to 29 characterised in that the pedal is provided at the rear with a scraper (61-62-67).

31. An arrangement according to one of claims 1 to 30 characterised in that the fixing arrangement is provided between a bicycle pedal and a cycling shoe.

32. An arrangement according to one of claims 1 to 30 characterised in that the fixing device is provided between a ski and a ski boot.

## Patentansprüche

1. Vorrichtung zum Befestigen eines Schuhs (2) an einer Anordnung (20), welche Vorrichtung wenigstens ein mit der Anordnung (20) einstückiges bzw. gemeinsames Magnetelement (11, 12, 23, 24, 101, 102, 111, 112, 125, 126) und eine einstückig bzw. gemeinsam mit dem Schuh (2) ausgebildete Schließplatte (30, 31-32, 33-34, 130) aus magnetischem Metall umfaßt, dadurch gekennzeichnet, daß die Pole des Magnetelements (11, 12, 23, 24, 101, 102, 111, 112, 125, 126) jeweils von einer Armierungsplatte (13-15, 14-16, 41-51, 42-52, 103-105, 104-106, 113-115, 114-116) aus magnetischem Metall flankiert sind, wobei die zwei Armierungsplatten (13-15, 14-16, 41-51, 42-52, 103-105, 104-106, 113-115, 114-116) mit der Schließplatte (30, 31-32, 33-34, 130) für das Schließen des Magnetfelds zusammenwirken.

2. Vorrichtung nach Anspruch 1, dadurch gekennzeichnet, daß sich die Magnetisierungsachse des Magnetelements (11, 12, 23, 24, 101, 102, 111, 112, 125, 126) parallel zur Schließplatte (30, 31-32, 33-34, 130) erstreckt.

3. Vorrichtung nach einem der Ansprüche 1 oder 2, dadurch gekennzeichnet, daß die Magnetisierungsachse des Magnetelements (11, 12, 23, 24, 101, 102, 111, 112, 125, 126) parallel zur Längsachse der Anordnung (20) ist, welche selbst parallel zur Längsachse des Schuhs (2) ist, wenn dieser an der Anordnung (20) festgelegt ist.

4. Vorrichtung nach einem der Ansprüche 1 bis 3, dadurch gekennzeichnet, daß zwei Magnetelemente (11, 12, 23, 24, 101, 102, 111, 112, 125, 126) vorgesehen sind, welche in Abstand voneinander angeordnet sind.

5. Vorrichtung nach Anspruch 4, dadurch gekennzeichnet, daß die Schließplatte (31-32, 33-34) aus zwei Halbplatten zusammengesetzt ist, welche sich jeweils in Richtung bzw. an der Position eines Magnetelements (11, 12, 23, 24, 101, 102, 111, 112, 125, 126) und ihren zugeordneten Armierungsplatten (13-15, 14-16, 41-51, 42-52, 103-105, 104-106, 113-115, 114-116) befinden.

6. Vorrichtung nach einem der Ansprüche 1 bis 5, dadurch gekennzeichnet, daß die Armierungsplatten (41-51, 42-52, 113-115, 114-116) den Körper des Pedals durchdringen.

7. Vorrichtung nach einem der Ansprüche 1 bis 5, dadurch gekennzeichnet, daß die Außenränder der Armierungsplatten (103-105, 104-106, 113-115, 114-116) vorspringend in bezug auf den Körper des Pedals angeordnet sind und die Verbindungsebene definieren.

8. Vorrichtung nach Anspruch 7, dadurch gekennzeichnet, daß die Außenränder der Armierungsplatten (113-115, 114-116) zylindrisch sind.

9. Vorrichtung nach Anspruch 4 und nach einem der Ansprüche 5 bis 8, dadurch gekennzeichnet, daß die zwei Magnetelemente (101, 102) in parallelepidpedischer Form mit unterschiedlichen Abmessungen vorliegen.

10. Vorrichtung nach einem der Ansprüche 1 bis 9, dadurch gekennzeichnet, daß die Armierungsplatten (104, 106), die ein und demselben Magneten (102) zugeordnet sind, unterschiedliche Abmessungen aufweisen und gleiche oder nahezu gleiche Querschnitte besitzen.

11. Vorrichtung nach einem der Ansprüche 1 bis 10, dadurch gekennzeichnet, daß die Armierungsplatten (41-51, 42-52) und die Magnetelemente (23, 24) eine zylindrische Form mit kreisförmigem Querschnitt, der auf der Achse des Pedals zentriert ist, aufweisen.

12. Vorrichtung nach Anspruch 4 und nach einem der Ansprüche 5 bis 11, dadurch gekennzeichnet, daß jedes der Magnetelemente (125, 126) nahe einer Seite bzw. Fläche des Pedalkörpers und entfernt von der anderen Seite angeordnet ist, wobei das Pedal drehbar bzw. zweiseitig einsetzbar ist.

13. Vorrichtung nach einem der Ansprüche 1 bis 12, dadurch gekennzeichnet, daß die Vorrichtung ein Abstands- bzw. Entfernungselement (5, 35, 36) umfaßt, welches von einem der Elemente, Anordnung (20) oder Schuh (2), getragen ist, welches mit einem komplementären Abstands- bzw. Entfernungselement (4, 17, 18, 26, 28, 46, 48), welches durch das andere Element getragen ist, zusammenwirkt, welche Abstandselemente die Entfernung des Schuhs (2) in bezug auf die Anordnung (20) in dem Sinn einer Vergrößerung des Magnetspalts, ausgehend von der Position, welche der Vereinigung bzw. Verbindung des Schuhs (2) mit der Anordnung (20) entspricht, zu bewirken erlauben.

14. Vorrichtung nach Anspruch 13, dadurch gekennzeichnet, daß die Abstandselemente (17, 18), welche durch die Anordnung (20) getragen sind, in Form von Nockensitzen, welche entlang einer Achse, die mit der Längsachse einen Winkel einschließt, angeordnet sind, während die Abstandselemente (35, 36), welche von dem Schuh getragen sind, durch die Ränder der Schließplatte (33, 34), als Nockennachlaufeinrichtungen, gebildet sind, welche die Sohle (3) des Schuhs (2) überquert.

15. Vorrichtung nach Anspruch 13, dadurch gekennzeichnet, daß die Abstandselemente (26, 28, 46, 48), welche durch die Anordnung (20) getragen sind, aus seitlich angeordneten Rampen ausgebildet sind.

16. Vorrichtung nach Anspruch 13, dadurch gekennzeichnet, daß eines der Abstandselemente (4) vorspringend ist in bezug auf die Seite bzw. Fläche (40) des Elements, durch welches es mit dem anderen Element wechselwirkt, wobei das andere Abstandselement (5) eine zu einem der Längsenden des Elements offene Ausnehmung umfaßt, wobei das eine der Abstandselemente (4) auf oder in Nachbarschaft von der Längsachse (58) des Elements angeordnet ist und zum Zusammenwirken mit den Rändern (6, 7, 118, 119) der Ausnehmung adaptiert ist.

17. Vorrichtung nach Anspruch 16, dadurch gekennzeichnet, daß die Abstandselemente (4) mit Spiel (50) mit den Rändern (6, 7, 118, 119) der Ausnehmung, welche in einem Abstand (8) voneinander über der maximalen Breite (59) dem einen der Abstandselemente (4) angeordnet sind, zusammenwirken.

18. Vorrichtung nach einem der Ansprüche 16 oder 17, dadurch gekennzeichnet, daß sich die Ränder (6, 7) der Ausnehmung in Längsrichtung erstrecken.

19. Vorrichtung nach einem der Ansprüche 16 oder 17, dadurch gekennzeichnet, daß die Ränder (118, 119) der Ausnehmung miteinander ein V, welches sich in Richtung nach außen geringfügig öffnet, einschließen.

20. Vorrichtung nach einem der Ansprüche 16 bis 19, dadurch gekennzeichnet, daß für das Zusammenwirken zwischen den Abstandselementen (5, 4), die durch den Schuh (2) bzw. die Anordnung (20) getragen sind, das eine (4) der Abstandselemente wenigstens eine geneigte Seite bzw. Fläche (9, 10) der Kooperation, welche einen Winkel (45) mit seiner vertikalen Ebene einschließt, aufweist und das andere Abstandselement (5) einen Anschlag (56, 57) aufweist, welcher mit der geneigten Seite (9, 10) zusammenwirkt.

21. Vorrichtung nach Anspruch 20, dadurch gekennzeichnet, daß die vertikale Ebene parallel zu oder in der Nachbarschaft einer parallelen Ebene zur vertikalen Ebene, die durch die Längsachse (58) des Elements verläuft, liegt, wobei der Anschlag (56, 57) durch einen Rand (6, 7, 118, 119) der Ausnehmung getragen ist.

22. Vorrichtung nach einem der Ansprüche 16 bis 21, in welcher gleichmäßige Anschlagelemente für das in Anschlag Gelangen in den zwei Richtungen der Längsrichtung des Schuhs (2) an der Anordnung (20) vorgesehen sind, dadurch gekennzeichnet, daß eines der gleichmäßigen Anschlagelemente für die eine der genannten Richtungen durch den Rand (64, 117) quer zur Ausnehmung (5) gebildet ist, welche für ein Zusammenwirken mit einem Anschlag (68, 121) adaptiert ist, der auf dem komplementären Abstandselement (4) des Elements angebracht ist und in bezug auf den Querrand (64, 117) auf oder in der Nachbarschaft der Längsachse (58) des Elements angeordnet ist.

23. Vorrichtung nach Anspruch 22, dadurch gekennzeichnet, daß das andere der gleichmäßigen Anschlagelemente für die andere der Richtungen von einer Einsenkung (65, 75, 85) in offener V-Form gebildet ist, welche von dem einen der Elemente getragen ist und mit welchem ein komplementäres Anschlagelement (69, 93, 94), welches durch das andere Element getragen ist, wechselwirkt.

24. Vorrichtung nach Anspruch 23, dadurch gekennzeichnet, daß das komplementäre Anschlagelement (69) ein Stift ist.

25. Vorrichtung nach Anspruch 23, dadurch gekennzeichnet, daß das komplementäre Anschlagelement (93, 94) in V-Form vorliegt.

26. Vorrichtung nach einem der Ansprüche 16 bis 25, dadurch gekennzeichnet, daß die Ausnehmung (5) in der Schließplatte (30, 130) vorgesehen ist.

27. Vorrichtung nach Anspruch 23, dadurch gekennzeichnet, daß die Einsenkung (65, 75) durch den Schuh (2) getragen ist und in Form eines V vorliegt, das zur gegenüberliegenden Seite von jener der Ausnehmung (5) offen ist.

28. Vorrichtung nach Anspruch 23, dadurch gekennzeichnet, daß die Einsenkung (85) durch die Anordnung (20) getragen ist und in V-Form vorliegt, welche zur selben Seite wie jene der bogenförmigen Ausnehmung (5) offen ist.

29. Vorrichtung nach einem der Ansprüche 1 bis 28, dadurch gekennzeichnet, daß die Vorrichtung ein Element (60, 74) zum Regeln der magnetischen Kraft der Verbindung umfaßt.

30. Vorrichtung nach einem der Ansprüche 1 bis 29, dadurch gekennzeichnet, daß das Pedal an seiner Rückseite mit einem Schmutzabstreifer (61-62-67) versehen ist.

31. Vorrichtung nach einem der Ansprüche 1 bis 30, dadurch gekennzeichnet, daß die Festlegungsvorrichtung zwischen einem Pedal eines Fahrrades und dem Schuh eines Radfahrers vorgesehen ist.

32. Vorrichtung nach einem der Ansprüche 1 bis 30, dadurch gekennzeichnet, daß die Festlegungsvorrichtung zwischen einem Schi und einem Schischuh vorgesehen ist.
